# EUROPÄISCHE PATENTSCHRIFT

(11) **EP 1 835 475 B1**
(45) Veröffentlichungstag und Bekanntmachung des Hinweises auf die Patenterteilung: **25.06.2008**
(21) Anmeldenummer: 06005270.1
(22) Anmeldetag: 15.03.2006
(51) Int. Cl.: G08G 1/16, G01S 17/93, G05D 1/02

(54) **Hindernisbeurteilungsverfahren für ein Kraftfahrzeug**
Obstacle assessment method for a vehicle
Procédé d'évaluation d'obstacles pour véhicule

(43) Veröffentlichungstag der Anmeldung: 19.09.2007
(73) Patentinhaber: Delphi Technologies, Inc., Troy, Michigan 48007 (US)
(72) Erfinder: Park, Su-Birm, Dr., 52457 Aldenhoven (DE); Ghosh, Sharmila, 55128 Mainz (DE)
(74) Vertreter: Manitz, Finsterwald & Partner GbR

(56) Entgegenhaltungen:
- DE-A1- 4 137 068
- DE-A1- 19 822 142
- DE-A1-3102004 007 55
- US-A1- 2005 001 715
- M.XIE,L.TRASSOUDAINE,J.ALIZON,M.THONNAT,J. GALLICE: "Active and intelligent sensing of road obstacles: Application to the European Eureka-PROMETHEUS Project" FOURTH INTERNATIONAL CONFERENCE ON COMPUTER VISION, [Online] Seiten 616-623, XP002384707 14.05.1993 Gefunden im Internet: URL:http://ieeexplore.ieee.org/iel2/3023/8 616/00378154.pdf?tp=&arnumber=378154&isnum ber=8616> [gefunden am 1993-05-14]

## Beschreibung

Die Erfindung betrifft ein Verfahren zum Beurteilen eines im Fahrweg eines Kraftfahrzeugs befindlichen Hindernisses, bei dem wenigstens ein Bild eines in Fahrtrichtung liegenden Umgebungsbereichs des Kraftfahrzeugs mittels einer Kamera aufgenommen und mittels einer Bildauswertungseinheit ausgewertet wird.

Ein derartiges Verfahren ist grundsätzlich bekannt. Typischerweise werden in regelmäßigen zeitlichen Abständen Bilder des Umgebungsbereichs durch die Kamera aufgenommen. Je nach Art und Qualität des verwendeten Bildanalyseverfahrens lässt sich bereits anhand der Auswertung der durch die Kamera aufgenommenen Bilder der Typ eines im Fahrweg befindlichen Hindernisses ermitteln, d.h. also feststellen, ob es sich bei dem detektierten Hindernis um z.B. um ein Motorrad, einen PKW, einen LKW oder einen Menschen handelt. Entsprechend dem Ergebnis der Bildauswertung lässt sich mit einer gewissen Wahrscheinlichkeit vorhersagen, ob das detektierte Hindernis eine Gefahr für das Kraftfahrzeug darstellt.

Ein Verfahren gemäß dem Oberbegriff des Anspruchs 1 ist aus der US-A-2005/0001715 bekannt.

Der Erfindung liegt die Aufgabe zugrunde, ein Verfahren zu schaffen, welches eine zuverlässigere Einschätzung der von einem im Fahrweg des Kraftfahrzeugs befindlichen Hindernis ausgehenden Gefahr ermöglicht.

Zur Lösung der Aufgabe ist ein Verfahren mit den Merkmalen des Anspruchs 1 vorgesehen.

Bei dem erfindungsgemäßen Verfahren wird wenigstens ein Bild eines in Fahrtrichtung liegenden Umgebungsbereichs des Kraftfahrzeugs mittels einer Kamera aufgenommen und mittels einer Bildauswertungseinheit ausgewertet. Ferner wird mittels einer Entfernungsmesseinrichtung mindestens eine Entfernungsmessung in dem Umgebungsbereich vorgenommen. Ein im Fahrweg des Kraftfahrzeugs befindliches Hindernis wird unter Berücksichtigung des Ergebnisses der Bildauswertung und des Ergebnisses der Entfernungsmessung beurteilt.

Der Erfindung liegt der allgemeine Gedanke zugrunde, ein detektiertes Hindernis nicht allein anhand der ausgewerteten Bilddaten zu beurteilen, sondern zur Beurteilung des Hindernisses zusätzlich die ermittelten Entfemungsdaten, d.h. die gemessene Entfernung zwischen dem Hindernis und dem Kraftfahrzeug, heranzuziehen. Die erfindungsgemäße Hindernisbeurteilung beruht mit anderen Worten auf einer Kombination von Bildauswertung und Entfernungsmessung.

Dadurch, dass sich die erfindungsgemäße Hindernisbeurteilung auf zwei voneinander unabhängige Messprinzipien stützt, nämlich zum einen auf die visuelle Erkennung eines Hindernisses mittels der Kamera und zum anderen auf die Distanzmessung, wird - im Vergleich zu einer Hinderniserkennung, die lediglich eines der beiden Messprinzipien ausnutzt - letztlich eine erhöhte Robustheit und Genauigkeit des Beurteilungsergebnisses erreicht.

Erfindungsgemäß wird die Genauigkeit und/oder die Geschwindigkeit der Bildauswertung in Abhängigkeit von dem Ergebnis der Entfernungsmessung variiert. Dies ermöglicht eine Anpassung der Qualität der Bildauswertung an die Gefährlichkeit eines detektierten Hindernisses.

Beispielsweise kann die Genauigkeit und/oder die Geschwindigkeit der Bildauswertung in einem Bildausschnitt erhöht werden, welcher einem Teilabschnitt des Umgebungsbereichs entspricht, in dem eine Entfernung zu einem im Fahrweg befindlichen Hindernis gemessen wurde, die einen vorbestimmten Schwellenwert unterschreitet.

Generell gilt, dass für die vollständige Auswertung eines aufgenommenen Bildes - bei einer vorgegebenen Auswertegenauigkeit und einer vorgegebenen Computerrechenleistung - eine gewisse Auswertezeit erforderlich ist. In kritischen Situationen kann es sinnvoll sein, die Auswertezeit zu reduzieren, damit aufeinander folgende Bilder schneller ausgewertet werden können. Dabei ist eine Reduzierung der Auswertezeit zum einen durch eine Verringerung der Auswerteauflösung erreichbar. Zum anderen ist es möglich, nicht das gesamte Bild, sondern lediglich einen ausgewählten Bildausschnitt zu analysieren. Es ist sinnvoll, hierfür einen Bildausschnitt auszuwählen, welcher demjenigen Teilabschnitt des Umgebungsbereichs entspricht, in dem die Entfernungsmesseinrichtung ein Hindernis detektiert hat, welches eine kritische Abstandsuntergrenze unterschritten hat.

Anders gesagt kann die Detektion eines gefährlich nahen Hindernisses durch die Entfernungsmessvorrichtung zu einer schnelleren bzw. genaueren Auswertung eines sicherheitsrelevanten Bildausschnitts führen. Auf diese Weise lässt sich das Messergebnis der Entfernungsmesseinrichtung besonders schnell und zuverlässig durch die Bildauswertungseinheit verifizieren bzw. um die Bildinformation ergänzen.

Alternativ oder zusätzlich wird die Messrate der Entfernungsmessung in Abhängigkeit von dem Ergebnis der Bildauswertung variiert. Dies ermöglicht eine Anpassung der zeitlichen Auflösung der Entfernungsmessung an den Typ bzw. die Lage eines durch die Bildauswertungseinheit detektierten Hindernisses. Bevorzugt wird die Messrate der Entfernungsmessung insbesondere in solchen Situationen erhöht, die von der Bildauswertungseinheit als kritisch bzw. gefährlich eingestuft werden.

Im Ergebnis lässt sich folglich mit einer erhöhten Zuverlässigkeit bestimmen, ob von einem detektierten Hindernis eine Gefahr für das Kraftfahrzeug ausgeht. Gegebenenfalls ist somit rechtzeitig eine geeignete Sicherheitsmaßnahme zum Schutz des Kraftfahrzeugs bzw. eines darin befindlichen Fahrzeuginsassen einleitbar, wie beispielsweise eine automatische Verringerung der Geschwindigkeit des Kraftfahrzeugs.

Gemäß einer vorteilhaften Ausführungsform des Verfahrens werden bzw. wird der Typ des Hindernisses, die Lage des Hindernisses relativ zum Kraftfahrzeug und/oder die Geschwindigkeit des Hindernisses relativ zum Kraftfahrzeug anhand der Bildauswertung und der Entfernungsmessung ermittelt. Anhand des ermittelten Typs, der ermittelten Relativlage und/oder der ermittelten Relativlage des Hindernisses kann eine besonders zuverlässige Prognose über die Gefährlichkeit des Hindernisses für das Kraftfahrzeug erstellt werden.

Gemäß einer weiteren Ausführungsform erfolgt in mehreren Teilabschnitten des Umgebungsbereichs jeweils mindestens eine Entfernungsmessung. Die Entfernungsmessungen sind in den einzelnen Teilabschnitten des Umgebungsbereichs unabhängig voneinander durchführbar. Durch die Entfernungsmesseinrichtung lässt sich somit nicht nur bestimmen, in welchem Abstand sich ein detektiertes Hindernis zum Kraftfahrzeug befindet, sondern es lässt sich außerdem feststellen, in welchem Teilabschnitt des Umgebungsbereichs das Hindernis liegt. Dies ermöglicht mit anderen Worten also eine "ortsaufgelöste" Entfernungsmessung, so dass die Lage des Hindernisses relativ zum Kraftfahrzeug mit einer gewissen Genauigkeit bereits durch die Entfernungsmesseinrichtung für sich genommen bestimmbar ist.

Vorteilhafterweise wird die Messrate der Entfernungsmessung in einem Teilausschnitt des Umgebungsbereichs erhöht, welcher einem Bildausschnitt entspricht, in dem ein Objekt ermittelt wurde, welches ein vorbestimmtes Kriterium, z.B. hinsichtlich Form und Größe, erfüllt. Durch die Bildauswertungseinheit wird also ein Teilausschnitt des Umgebungsbereichs vorgegeben, in dem die Entfernungsmessung mit einer erhöhten zeitlichen Auflösung durchgeführt werden soll. Detektiert die Kamera beispielsweise ein besonders großes Objekt, so lässt sich durch eine entsprechende gezielte Entfernungsmessung schnell verifizieren, ob es sich bei dem Objekt um ein besonders nahes Hindernis handelt.

Des Weiteren kann die Messrate der Entfernungsmessung in einem oder mehreren Teilausschnitten des Umgebungsbereichs erhöht werden, wenn ein Objekt in den aufgenommenen Bildern seine Position und/oder Größe schnell ändert, was z.B. auf ein vor dem Kraftfahrzeug einscherendes Fahrzeug hindeuten und eine Verringerung der Geschwindigkeit des Kraftfahrzeugs erforderlich machen könnte.

Weiterer Gegenstand der Erfindung ist eine Vorrichtung mit den Merkmalen des Anspruchs 9, durch welche die voranstehend beschriebenen Vorteile entsprechend erreicht werden.

Gemäß einer Ausführungsform der Vorrichtung umfasst die Entfernungsmesseinrichtung eine Lichtquelle, z.B. einen Laser, zum Aussenden eines codierten Lichtsignals, einen Sensor zum Empfangen eines an einem Hindernis reflektierten Lichtsignals und eine Auswerteeinheit zum Ermitteln der Entfernung zwischen dem Hindernis und dem Kraftfahrzeug aus der Laufzeit des reflektierten Lichtsignals. Die Entfernungsmessung beruht mit anderen Worten auf dem Lidar-Prinzip. Derartige Lidar-Entfernungsmesseinrichtungen sind leicht verfügbar, kostengünstig erhältlich und ermöglichen eine besonders zuverlässige Entfernungsmessung.

Die Entfernungsmesseinrichtung kann einen Umlenkmechanismus umfassen, um das von der Lichtquelle ausgestrahlte Licht nacheinander in verschiedene Teilabschnitte des Umgebungsbereichs zu lenken. Der Umlenkmechanismus kann beispielsweise einen Drehspiegel aufweisen, durch den ein von der Lichtquelle ausgesandter und aus mehreren Lichtsignalen bestehender Lichtstrahl nach Art eines Laserscanners über den zu überwachenden Umgebungsbereich hinweg geschwenkt werden kann.

Alternativ oder zusätzlich kann die Entfernungsmesseinrichtung mehrere Lichtquellen umfassen, die jeweils einen Teilabschnitt des Umgebungsbereichs ausleuchten. Jede Lichtquelle ist somit zur Überwachung eines jeweils zugeordneten Teilabschnitts zuständig. Um den Umgebungsbereich möglichst lückenlos zu erfassen, sollten die Lichtquellen in diesem Fall divergierende Lichtbündel abstrahlen, d.h. also eine keulenartige Abstrahlcharakteristik aufweisen.

Nachfolgend wird die Erfindung rein beispielhaft anhand einer vorteilhaften Ausführungsform unter Bezugnahme auf die Zeichnung beschrieben.

Es zeigen:
- Fig. 1: eine schematische Draufsicht auf ein Kraftfahrzeug mit einer erfindungsgemäßen Hinderniserkennungsvorrichtung; und
- Fig. 2: eine schematische Darstellung der Hinderniserkennungsvorrichtung von Fig. 1.

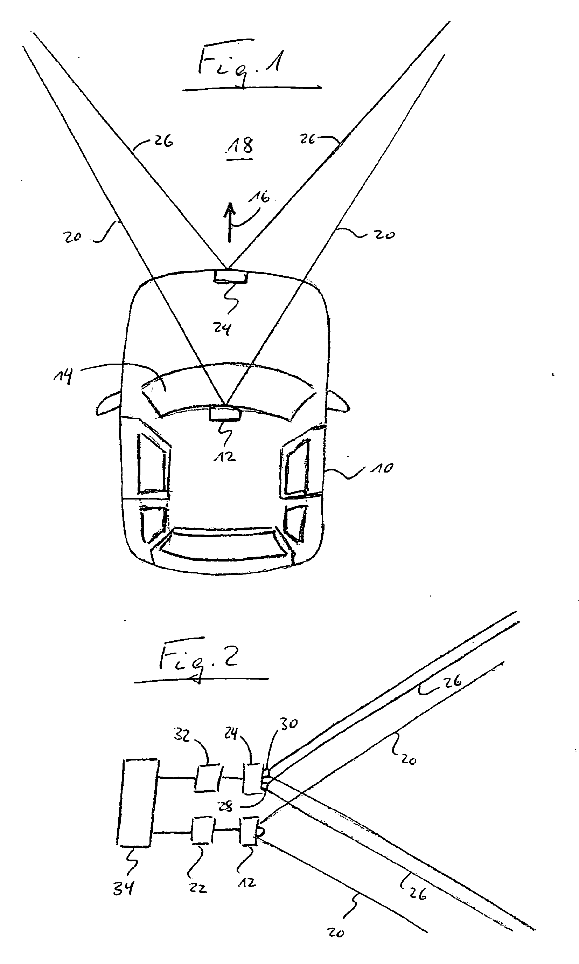

In Fig. 1 ist ein Kraftfahrzeug 10 dargestellt, welches mit einer erfindungsgemäßen Hindernisbeurteilungsvorrichtung ausgerüstet ist. Die Vorrichtung umfasst eine Kamera 12, z.B. eine digitale Monokamera, die im oberen Randbereich einer Windschutzscheibe 14 des Kraftfahrzeugs 10 angeordnet ist. Alternativ kann die Kamera 12 auch in einem anderen Bereich des Kraftfahrzeugs 10 vorgesehen sein.

Die Kamera 12 ist in Fahrtrichtung 16 orientiert und erfasst einen in Fahrtrichtung 16 gesehen vor dem Fahrzeug 10 gelegenen Umgebungsbereich 18. Der durch die Kamera 12 erfassbare Winkelbereich ist durch die Linien 20 angedeutet.

Die Kamera 12 nimmt in regelmäßigen zeitlichen Abständen jeweils ein Bild des Umgebungsbereichs 18 auf. Die aufgenommenen Bilder werden von einer mit der Kamera 12 verbundenen Bildauswertungseinheit 22 (Fig. 2) ausgewertet. Zur Auswertung der Bilder kann ein an sich bekanntes Bildsegmentierungsverfahren verwendet werden.

Ferner umfasst die Vorrichtung eine Entfernungsmesseinrichtung 24, die im Bereich eines Stoßfängers des Kraftfahrzeugs 10 angeordnet ist. Grundsätzlich ist es auch möglich, die Entfernungsmesseinrichtung 24 an einer anderen Stelle des Kraftfahrzeugs 10 zu platzieren.

Im vorliegenden Ausführungsbeispiel arbeitet die Entfernungsmesseinrichtung 24 nach dem Lidar-Prinzip, wobei auch andere Entfernungsmessmethoden in Frage kommen. Die Entfernungsmesseinrichtung 24 ist ebenfalls in Fahrtrichtung 16 orientiert.

Wie Fig. 1 zeigt, ist der durch die Entfernungsmesseinrichtung 24 erfasste Winkelbereich, angedeutet durch die Linien 26, etwas größer als der durch die Kamera 12 erfasste Winkelbereich. Grundsätzlich ist es auch möglich, die Kamera 12 und die Entfernungsmesseinrichtung 24 so auszubilden und anzuordnen, dass die jeweils erfassten Bereiche im Wesentlichen deckungsgleich sind. Wichtig ist, dass der von der Kamera 12 erfasste Bereich und der durch die Entfernungsmesseinrichtung 24 erfasste Bereich zumindest in einem sicherheitsrelevanten, in Fahrtrichtung 16 vor dem Kraftfahrzeug 10 liegenden Umgebungsbereich 18 des Kraftfahrzeugs 10 einander überlappen.

Die Entfernungsmesseinrichtung 24 weist eine Lichtquelle 28, z.B. einen Laser, zum Aussenden von zeitlich zueinander beabstandeten codierten Lichtsignalen in den Umgebungsbereich 18 sowie einen lichtempfindlichen Sensor 30 zum Empfangen eines ausgesandten Lichtsignals auf, welches an einem im Umgebungsbereich 18 befindlichen Objekt reflektiert wurde (Fig. 2). Die Entfernungsmesseinrichtung 24 umfasst ferner eine Auswerteeinheit 32 zum Ermitteln der Entfernung zwischen dem Objekt und dem Kraftfahrzeug 10 aus der Laufzeit des reflektierten Lichtsignals.

Die Lichtquelle 28 der gezeigten Entfernungsmesseinrichtung 24 ist durch einen Laser gebildet, der die Lichtsignale in Form eines im Wesentlichen parallelen Lichtstrahls aussendet. Um eine Überwachung des gewünschten Winkelbereichs durch den Laser zu ermöglichen, ist ein nicht gezeigter Drehspiegel vorgesehen, durch den der ausgesandte Lichtstrahl nach Art eines Laserscanners durch den Umgebungsbereich 18 hindurch geschwenkt werden kann.

Alternativ ist es auch möglich, die Entfernungsmesseinrichtung 24 mit mehreren Lichtquellen 28, z.B. Lasern, zu versehen, die ihre Lichtsignale in Form von divergierenden Lichtbündeln derart in den Umgebungsbereich 18 aussenden, dass die divergierenden Lichtbündel feststehende Lichtkeulen bilden, die jeweils einen vorbestimmten Teilabschnitt des Umgebungsbereichs 18 erfassen.

Ein im Umgebungsbereich 18 auftretendes Hindernis, wie beispielsweise ein vorausfahrendes Fahrzeug, ein stationärer Gegenstand oder eine Person, wird nicht nur von der Kamera 12, sondern auch von der Entfernungsmesseinrichtung 24 detektiert. Eine sowohl mit der Bildauswertungseinheit 22 als auch mit der Entfernungsmesseinrichtung 24 verbundene Auswertungseinrichtung 34 der Hindernisdetektionsvorrichtung wertet die Ergebnisse der Bildanalyse und der Entfernungsmessung in Abhängigkeit voneinander aus. Genauer gesagt ermittelt die Auswertungseinrichtung 34 den Typ des detektierten Hindernisses, d.h. also, ob es sich bei dem Hindernis z.B. um ein Motorrad, einen PKW, einen LKW oder einen Menschen handelt, sowie die Position und die Geschwindigkeit des detektierten Hindernisses relativ zu dem Kraftfahrzeug 10.

Anhand dieser Daten erstellt die Auswertungseinrichtung 34 eine Prognose über die Gefährlichkeit des Hindernisses für das Kraftfahrzeug 10. Je nach Grad der Gefährlichkeit, in die das detektierte Hindernis eingestuft wird, kann die Auswertungseinrichtung 34 Sicherheitsmaßnahmen zum Schutz des Kraftfahrzeugs 10 sowie eines darin befindlichen Fahrzeuginsassens veranlassen, z.B. eine Verringerung der Geschwindigkeit des Kraftfahrzeugs 10. Alternativ oder zusätzlich kann die Auswertungseinrichtung 34 auch eine detailliertere Analyse der Gefahrensituation veranlassen und zu diesem Zweck eine genauere Untersuchung des detektierten Hindernisses bewirken.

So kann beispielsweise die Detektion eines Hindernisses, dessen Entfernung zu dem Kraftfahrzeug 10 eine kritische Untergrenze unterschreitet, zu einer genaueren und/oder schnelleren Auswertung der durch die Kamera 12 aufgenommenen Bilder führen, indem die aufgenommenen Bilder nicht mehr vollständig ausgewertet werden, sondern nur noch ein sicherheitsrelevanter Bildausschnitt analysiert wird, welcher demjenigen Teilabschnitt des Umgebungsbereichs 18 entspricht, in dem die Entfernungsmesseinrichtung 24 das Hindernis detektiert hat.

Umgekehrt kann, wenn bei der Analyse der aufgenommenen Bilder ein Objekt ermittelt wird, welches hinsichtlich z.B. Form und Größe ein vorbestimmtes Kriterium erfüllt, eine Entfernungsmessung mit einer erhöhten zeitlichen Auflösung veranlasst werden. Umfasst die Entfernungsmesseinrichtung 24 - wie im dargestellten Ausführungsbeispiel - lediglich eine Lichtquelle 28, so wird bei einer Erhöhung der Messrate der gesamte überwachte Umgebungsbereich 18 mit der erhöhten Rate abgetastet. Weist die Entfernungsmesseinrichtung 24 hingegen mehrere Lichtquellen 28 auf, die jeweils einen definierten Teilabschnitt des Umgebungsbereichs 18 abdecken, so kann die Entfernungsmessrate auch nur in demjenigen Teilabschnitt erhöht werden, in welchen das durch die Kamera 12 detektierte Hindernis fällt.

Auf diese Weise lässt sich ein detektiertes Hindernis sowohl im Wege der Bildauswertung als auch im Wege der Entfernungsmessung genau verfolgen. Diese Hindernisverfolgung ermöglicht es, die Position des Hindernisses zu einem nachfolgenden Zeitpunkt zu prognostizieren, um dadurch zum einen auf die Gefährlichkeit des Hindernisses für das Kraftfahrzeug 10 zurückzuschließen und zum anderen die räumliche Auflösung und/oder Geschwindigkeit bei der Bildauswertung bzw. die zeitliche Auflösung bei der Entfernungsmessung zu erhöhen.

### Bezugszeichenliste

- 10: Kraftfahrzeug
- 12: Kamera
- 14: Windschutzscheibe
- 16: Fahrrichtung
- 18: Umgebungsbereich
- 20: Linie
- 22: Bildauswertungseinheit
- 24: Entfernungsmesseinrichtung
- 26: Linie
- 28: Lichtquelle
- 30: Sensor
- 32: Auswerteeinheit
- 34: Auswertungseinrichtung

## Patentansprüche

1. Verfahren zum Beurteilen eines im Fahrweg eines Kraftfahrzeugs (10) befindlichen Hindernisses, bei dem
wenigstens ein Bild eines in Fahrtrichtung (16) liegenden Umgebungsbereichs (18) des Kraftfahrzeugs (10) mittels einer Kamera (12) aufgenommen und mittels einer Bildauswertungseinheit (22) ausgewertet wird,
mittels einer Entfernungsmesseinrichtung (24) mindestens eine Entfernungsmessung in dem Umgebungsbereich (18) vorgenommen wird, und
ein im Fahrweg des Kraftfahrzeugs befindliches Hindernis unter Berücksichtigung des Ergebnisses der Bildauswertung und des Ergebnisses der Entfernungsmessung beurteilt wird,
**dadurch gekennzeichnet, dass**
die Genauigkeit und/oder die Geschwindigkeit der Bildauswertung in Abhängigkeit von dem Ergebnis der Entfernungsmessung variiert wird und / oder
die Messrate der Entfernungsmessung in Abhängigkeit von dem Ergebnis der Bildauswertung variiert wird.

2. Verfahren nach Anspruch 1,
**dadurch gekennzeichnet, dass**
der Typ des Hindernisses, die Lage des Hindernisses relativ zum Kraftfahrzeug und/oder die Geschwindigkeit des Hindernisses relativ zum Kraftfahrzeug anhand der Bildauswertung und der Entfernungsmessung ermittelt werden bzw. wird.

3. Verfahren nach Anspruch 2,
**dadurch gekennzeichnet, dass**
anhand des ermittelten Typs, der ermittelten Relativlage und/oder der ermittelten Relativgeschwindigkeit des Hindernisses eine Prognose über die Gefährlichkeit des Hindernisses für das Kraftfahrzeug (10) erstellt wird.

4. Verfahren nach einem der vorherigen Ansprüche,
**dadurch gekennzeichnet, dass**
in mehreren Teilabschnitten des Umgebungsbereichs (18) jeweils mindestens eine Entfernungsmessung erfolgt.

5. Verfahren nach einem der vorherigen Ansprüche,
**dadurch gekennzeichnet, dass**
die Genauigkeit und/oder die Geschwindigkeit der Bildauswertung zumindest in einem Bildausschnitt erhöht wird, welcher einem Teilabschnitt des Umgebungsbereichs (18) entspricht, in dem eine Entfernung zu einem im Fahrweg befindlichen Hindernis gemessen wurde, die einen vorbestimmten Schwellenwert unterschreitet.

6. Verfahren nach einem der vorherigen Ansprüche,
**dadurch gekennzeichnet, dass**
die Messrate der Entfernungsmessung zumindest in einem Teilausschnitt des Umgebungsbereichs (18) erhöht wird, welcher einem Bildausschnitt entspricht, in dem ein Hindernis ermittelt wurde, welches ein vorbestimmtes Kriterium, z.B. hinsichtlich Form und Größe, erfüllt.

7. Verfahren nach einem der vorherigen Ansprüche,
**dadurch gekennzeichnet, dass**
das aufgenommene Bild mittels eines Bildsegmentierungsverfahrens analysiert wird.

8. Verfahren nach einem der vorherigen Ansprüche,
**dadurch gekennzeichnet, dass**
die Entfernungsmesseinrichtung (24) nach dem Lidar-Prinzip erfolgt.

9. Vorrichtung zur Beurteilung eines im Fahrweg eines Kraftfahrzeugs (10) befindlichen Hindernisses, insbesondere zur Durchführung des Verfahrens nach einem der vorherigen Ansprüche, mit einer in einen Umgebungsbereich (18) des Kraftfahrzeugs (10) gerichteten Kamera (12), einer Bildauswertungseinheit (22) zur Auswertung eines durch die Kamera (12) aufgenommenen Bildes, einer in den Umgebungsbereich (18) gerichteten Entfernungsmesseinrichtung (24) und einer mit der Bildauswertungseinheit (22) und der Entfernungsmesseinrichtung (24) verbundenen Auswertungseinrichtung (34), durch die ein im Fahrweg des Kraftfahrzeugs (10) befindliches Hindernis unter Berücksichtigung des Ergebnisses der Bildauswertung und des Ergebnisses der Entfernungsmessung beurteilbar ist,
**dadurch gekennzeichnet, dass**
die Genauigkeit und/oder die Geschwindigkeit der Bildauswertung in Abhängigkeit von dem Ergebnis der Entfernungsmessung variierbar ist und/oder
die Messrate der Entfernungsmessung in Abhängigkeit von dem Ergebnis der Bildauswertung variierbar ist.

10. Vorrichtung nach Anspruch 9,
**dadurch gekennzeichnet, dass**
die Entfernungsmesseinrichtung (24) eine Lichtquelle (28) zum Aussenden eines codierten Lichtsignals, einen Sensor (30) zum Empfangen eines an einem Hindernis reflektierten Lichtsignals und eine Auswerteeinheit (32) zum Ermitteln der Entfernung zwischen dem Hindernis und dem Kraftfahrzeug (10) aus der Laufzeit des reflektierten Lichtsignals umfasst.

11. Vorrichtung nach Anspruch 9 oder 10,
**dadurch gekennzeichnet, dass**
die Entfernungsmesseinrichtung (24) einen Umlenkmechanismus umfasst, um das von der Lichtquelle (28) ausgestrahlte Licht nacheinander in verschiedene Teilabschnitte des Umgebungsbereichs (18) zu lenken.

12. Vorrichtung nach Anspruch 9 oder 10,
**dadurch gekennzeichnet, dass**
die Entfernungsmesseinrichtung (24) mehrere Lichtquellen (28) umfasst, die jeweils einen Teilabschnitt des Umgebungsbereichs (18) ausleuchten.

## Claims

1. A method for the evaluation of an obstacle located in the travel path of a motor vehicle (10), wherein
at least one image of an environment (18) of the motor vehicle (10) disposed in the direction of travel (16) is taken by means of a camera (12) and is evaluated by means of an image evaluation unit (22);
at least one distance measurement is taken in the environment (18) by means of a distance measuring device (24); and
an obstacle located in the travel path of the motor vehicle is evaluated while taking account of the result of the image evaluation and of the result of the distance measurement,
**characterized in that**
the precision and/or the speed of the image evaluation is varied in dependence on the result of the distance measurement; and/or
the measurement rate of the distance measurement is varied in dependence on the result of the image evaluation.

2. A method in accordance with claim 1, **characterized in that** the type of the obstacle, the position of the obstacle relative to the motor vehicle and/or the speed of the obstacle relative to the motor vehicle is/are determined with reference to the image evaluation and to the distance measurement.

3. A method in accordance with claim 2, **characterized in that** a forecast on the danger of the obstacle for the motor vehicle (10) is made with reference to the determined type, the determined relative position and/or the determined relative speed of the obstacle.

4. A method in accordance with any one of the preceding claims, **characterized in that** at least one distance measurement is made in each case in a plurality of part sections of the environment (18).

5. A method in accordance with any one of the preceding claims, **characterized in that** the precision and/or the speed of the image evaluation is increased in at least one image section which corresponds to a part section of the environment (18) in which a distance to an obstacle located in the travel path was measured which falls below a predetermined threshold value.

6. A method in accordance with any one of the preceding claims, **characterized in that** the measurement rate of the distance measurement is increased at least in a part section of the environment (18) which corresponds to an image section in which an obstacle was determined which satisfies a predetermined criterion e.g. with respect to shape and size.

7. A method in accordance with any one of the preceding claims, **characterized in that** the image taken is analyzed by means of an image segmentation method.

8. A method in accordance with any one of the preceding claims, **characterized in that** the distance measurement device (24) works according to the lidar principle.

9. An apparatus for the evaluation of an obstacle located in the travel path of a motor vehicle (10), in particular for the carrying out of the method in accordance with any one of the preceding claims, comprising a camera (12) directed into an environment (18) of the motor vehicle (10), an evaluation unit (22) for the evaluation of an image taken by the camera (12), a distance measurement device (24) directed into the environment (18) and an evaluation device (34) which is connected to the image evaluation unit (22) and to the distance measurement device (24) and by which an obstacle located in the travel path of the motor vehicle (10) can be evaluated while taking account of the result of the image evaluation and of the result of the distance measurement,
**characterized in that**
the precision and/or the speed of the image evaluation is variable in dependence on the result of the distance measurement; and/or
the measurement rate of the distance measurement is variable in dependence on the result of the image evaluation

10. An apparatus in accordance with claim 9, **characterized in that** the distance measurement device (24) comprises a light source (28) for the transmission of an encoded light signal, a sensor (30) for the reception of a light signal reflected at an obstacle and an evaluation unit (32) for the determination of the distance between the obstacle and the motor vehicle (10) from the elapsed time of the reflected light signal.

11. An apparatus in accordance with claim 9 or claim 10, **characterized in that** the distance measurement device (24) comprises a deflection mechanism to deflect the light radiated by the light source (28) successively into different part sections of the environment (18).

12. An apparatus in accordance with claim 9 or claim 10, **characterized in that** the distance measurement device (24) comprises a plurality of light sources (28) which each illuminate a part section of the environment (18).

## Revendications

1. Procédé d'évaluation d'un obstacle se trouvant sur la trajectoire d'un véhicule automobile (10), dans lequel
au moins une image d'une zone environnante (18) située dans la direction de marche (16) du véhicule automobile (10) est prise au moyen d'une caméra (12) et est analysée au moyen d'une unité d'analyse d'images (22),
au moins une mesure de distance dans de la zone environnante (18) est effectuée au moyen d'un dispositif (24) de mesure de distances, et
un obstacle situé sur la trajectoire du véhicule automobile est évalué en prenant en compte le résultat de l'analyse d'images et le résultat de la mesure de distances,
**caractérisé en ce que**
la précision et/ou la vitesse de l'analyse d'images est/sont modifiée(s) en fonction du résultat de la mesure de distances, et/ou que
la fréquence de mesure de mesure de distances est modifiée en fonction du résultat de l'analyse d'images.

2. Procédé selon la revendication 1,
**caractérisé en ce que**
le type d'obstacle, la position de l'obstacle par rapport au véhicule automobile et/ou la vitesse relative entre l'obstacle et le véhicule automobile est ou sont déterminée(s) par l'intermédiaire de l'analyse d'images et de la mesure de distances.

3. Procédé selon la revendication 2,
**caractérisé en ce que**
à partir du type, de la position relative et/ou de la vitesse relative ainsi déterminés de l'obstacle, un pronostic est établi quant à la dangerosité de l'obstacle pour le véhicule automobile (10).

4. Procédé selon l'une quelconque des revendications précédentes,
**caractérisé en ce que**
respectivement au moins une mesure de distance est effectuée dans plusieurs secteurs partiels de la zone environnante (18)

5. Procédé selon l'une quelconque des revendications précédentes,
**caractérisé en ce que**
la précision et/ou la vitesse de l'analyse d'images sont augmentées au moins dans un secteur de l'image, qui correspond à un secteur partiel de la zone environnante (18), dans lequel a été mesurée une distance par rapport à un obstacle situé sur la trajectoire du véhicule, qui est inférieure à une valeur seuil prédéterminée.

6. Procédé selon l'une quelconque des revendications précédentes,
**caractérisé en ce que**
la fréquence de mesure de la mesure de distances est augmentée au moins pour un secteur partiel de la zone environnante (18), qui correspond à un secteur de l'image, dans lequel a été détecté un obstacle remplissant un critère prédéterminé, concernant par exemple la forme et la taille.

7. Procédé selon l'une quelconque des revendications précédentes,
**caractérisé en ce que**
l'image prise est analysée en mettant en oeuvre un procédé de segmentation de l'image.

8. Procédé selon l'une quelconque des revendications précédentes,
**caractérisé en ce que**
le dispositif de mesure de la distance (24) fonctionne selon le principe du Lidar.

9. Dispositif d'évaluation d'un obstacle se trouvant sur la trajectoire d'un véhicule automobile (10), en particulier pour la mise en oeuvre du procédé selon l'une quelconque des revendications précédentes, comprenant une caméra (12) dirigée vers une zone environnante (18) du véhicule automobile (10), une unité d'analyse d'images (22) destinée à analyser une image prise par la caméra (12), un dispositif (24) de mesure de distances dirigé vers la zone environnante (18), et un dispositif d'analyse (34) relié à l'unité d'analyse d'images (22) et au dispositif de mesure de distances (24), et grâce auquel un obstacle se trouvant sur la trajectoire du véhicule automobile (10) est évalué en prenant en compte le résultat de l'analyse d'images et le résultat de la mesure des distances,
**caractérisé en ce que**
la précision et/ou la vitesse de l'analyse d'images est/sont modifiée(s) en fonction du résultat de la mesure de distances, et/ou que
la fréquence de mesure de la mesure de distances est modifiée en fonction de l'analyse d'images.

10. Dispositif selon la revendication 9,
**caractérisé en ce que**
le dispositif de mesure de distances (24) comprend une source de lumière (28) destinée à émettre un signal de lumière codé, un capteur (30) destiné à recevoir un signal de lumière réfléchi par un obstacle, et une unité d'analyse (32) destinée à déterminer la distance entre l'obstacle et le véhicule automobile (10) à partir du temps de parcours du signal de lumière réfléchi.

11. Dispositif selon la revendication 9 ou 10,
**caractérisé en ce que**
le dispositif de mesure de distances (24) comprend un mécanisme de changement de direction, de façon à pouvoir diriger la lumière émise par la source de lumière (28) successivement dans différents secteurs partiels de la zone environnante (18).

12. Dispositif selon la revendication 9 ou 10,
**caractérisé en ce que**
le dispositif de mesure de distances (24) comprend plusieurs sources de lumière (28), qui éclairent chacune un secteur partiel de la zone environnante (18).
